# EUROPEAN PATENT APPLICATION

(11) **EP 4 456 614 A1**
(43) Date of publication of application: **30.10.2024**
(21) Application number: 24169979.2
(22) Date of filing: 12.04.2024
(51) Int. Cl.: H04W 52/14, H04W 84/12, H04W 92/18, H04W 52/38

(54) **TRANSMISSION POWER AND RECEIVER GAIN CONTROL OF MULTI-LINK DEVICE**

(30) Priority: 25.04.2023 US 202363498026 P; 08.04.2024 US 202418629871
(71) Applicant: MediaTek Inc., Hsin-Chu 300 (TW)
(72) Inventor: WANG, Chin-Hung, 30078 Hsinchu City (TW); CHEN, Gui-Lin, 30078 Hsinchu City (TW); TSENG, Tzu-Yen, 30078 Hsinchu City (TW); LIANG, Hui-Hung, 30078 Hsinchu City (TW)
(74) Representative: Hoefer & Partner Patentanwälte mbB

(57) **Abstract**

The present invention provides a control method of a MLD, wherein the MLD includes a first station and a second station. The control method includes: using the first station to wirelessly transmit a first packet; notifying the second station that the first station is transmitting the first packet; determining an upper limit of a RX gain of the second station; determining a first RX gain of the second station according to information of a header of a second packet received by the second station and the upper limit of the RX gain; using the first RX gain to receive a payload of the second packet; and after receiving a notification indicating that a transmission of the first packet is ended, releasing the upper limit of the reception gain of the second station.

## Description

### Cross Reference to Related Applications

This application claims the benefit of U.S. Provisional Application No. 63/498,026, filed on April 25th, 2023. The content of the application is incorporated herein by reference.

### Background

Multi-Link Operation (MLO) technology of 802.11be aggregates multiple channels on different frequency bands at the same time, negotiating seamless network traffic even if there is interference or congestion. This greatly increases speeds, allows more effective mesh networks, and provides the very latest interference mitigation techniques to ensure wireless devices are always connected fast and reliably, even in dense network environments. For example, the station such as a cell phone may use one link to communicate with the AP, and use the other link for wireless display or augmented reality (AR) or virtual reality (VR).

However, when the multiple links of the station (STA) use channels of 2.4GHz band, 5GHz band (e.g., 4.915 GHz - 5.825 GHz) and/or a 6GHz band (e.g., 5.925 GHz - 7.125 GHz), the radio signals transmitting and receiving via the same STA on the multiple channels may interfere with each other through RF signal injections via adjacent antennas, affecting signal quality or transceiver operation. For example, as the Wi-Fi signals are sent from and received by 5GHz band and 6GHz band simultaneously, the signals would cause multiple order intermodulation products, such as second order and third order intermodulation products. As 5GHz band and 6GHz band are very close in frequency to each other, the third intermodulation products would fall on a close frequency point from the Wi-Fi signals.

In order to solve the above-mentioned problem, a conventional method is to set a filter between an antenna and the analog front-end circuit in each of the transceiver, for filtering the signal (s) from the other transceiver. Unfortunately, the conventional signal filtering technique would not be able to completely filter out the interference caused by the third intermodulation products. Moreover, the bandpass filters dedicated for the 5GHz band and 6GHz band have high complexity and high manufacturing costs, thus resulting in increased cost of the station.

### Summary

It is therefore an objective of the present invention to provide a control method of a multi-link device (MLD), which can control transmission power and/or receiver gain to reduce mutual interference of signals on different links, so that there is no need to set filters in the transceivers, to solve the problems in the conventional art. A method and a multi-link device according to the invention are defined in the independent claims. The dependent claims define preferred embodiments thereof.

According to one embodiment of the present invention, a control method of a MLD is disclosed, wherein the MLD comprises a first station and a second station, the first station and the second station establish a first link and a second link with one or more devices, respectively. The control method comprises: using the first station to wirelessly transmit a first packet via the first link; notifying the second station that the first station is transmitting the first packet; determining an upper limit of a receiver (RX) gain of the second station; determining a first RX gain of the second station according to information of a header of a second packet received by the second station via the second link and the upper limit of the RX gain of the second station; using the first RX gain to receive a payload of the second packet; and after receiving a notification indicating that a transmission of the first packet is ended, releasing the upper limit of the reception gain of the second station.

According to one embodiment of the present invention, a MLD comprising a first station and a second station is disclosed, wherein the first station and the second station establish a first link and a second link with one or more devices, respectively. The first station wirelessly transmits a first packet via the first link, and notifies the second station that the first station is transmitting the first packet. The second station determines an upper limit of a RX gain of the second station, and determines a first RX gain of the second station according to information of a header of a second packet received by the second station via the second link and the upper limit of the RX gain of the second station. The second station uses the first RX gain to receive a payload of the second packet. After receiving a notification indicating that a transmission of the first packet is ended, the second station releases the upper limit of the reception gain of the second station.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating an example network environment in which various solutions and schemes in accordance with the present disclosure may be implemented
FIG. 2 is a control method of a STA MLD according to one embodiment of the present invention.
FIG. 3 is a control method of a STA MLD according to one embodiment of the present invention.

### Detailed Description

Certain terms are used throughout the following description and claims to refer to particular system components. As one skilled in the art will appreciate, manufacturers may refer to a component by different names. This document does not intend to distinguish between components that differ in name but not function. In the following discussion and in the claims, the terms "including" and "comprising" are used in an open-ended fashion, and thus should be interpreted to mean "including, but not limited to ...". The terms "couple" and "couples" are intended to mean either an indirect or a direct electrical connection. Thus, if a first device couples to a second device, that connection may be through a direct electrical connection, or through an indirect electrical connection via other devices and connections.

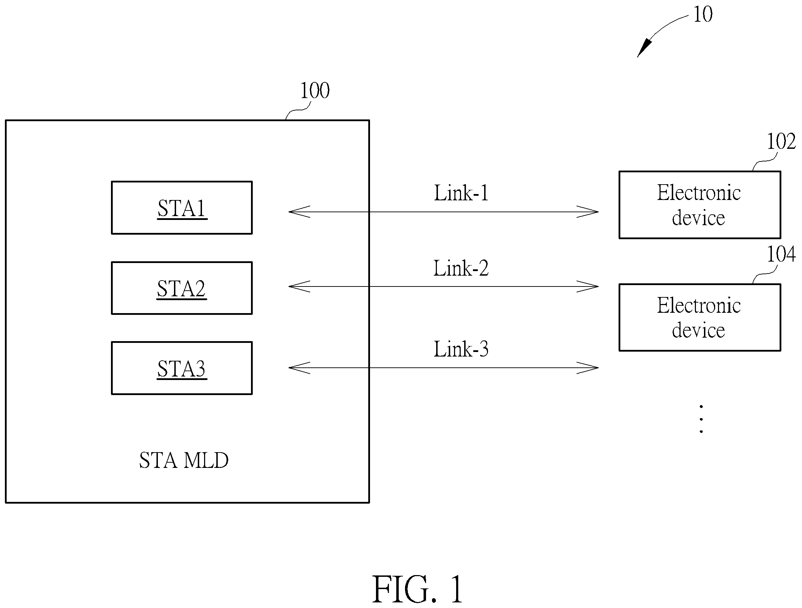

FIG. 1 is a diagram illustrating an example network environment 10 in which various solutions and schemes in accordance with the present disclosure may be implemented. Referring to FIG. 1, a station multi-link device (STA MLD) 100 according to one embodiment of the present invention is illustrated. As shown in FIG. 1, the STA MLD 100 comprises at least a first station, a second station and a third station, wherein STA1. STA2 and STA3 used as the first station, the second station and the third station in the following description. The STAMLD 100 can be a cell phone, a tablet, a notebook, or any other electronic device capable of wirelessly communicating with other electronic devices such as 102 and 104. In addition, each of STA1, STA2 and STA3 is configured to transmit packet or receive packet via an antenna, and each of STA1, STA2 and STA3 may have its own transceiver circuit comprising at least a media address control (MAC) layer circuit and physical layer circuit.

In this embodiment, the STA MLD 100 is communicated with other electronic devices by using two or more links such as Link-1, Link-2 and Link-3 shown in FIG. 1. In this embodiment, the Link-1 may use a channel corresponding to a 2.4GHz band (e.g., 2.412GHz - 2.484GHz), a 5GHz band (e.g., 4.915GHz - 5.825GHz) or a 6GHz band (e.g., 5.925GHz - 7.125GHz) ; and the Link-2 may also use a channel corresponding to the 2.4GHz band, the 5GHz band or the 6GHz band; and the Link-3 may also use a channel corresponding to the 2.4GHz band, the 5GHz band or the 6GHz band.

As described in the background of the present invention, the signals on the channels of two links such as Link-1 and Link-2 may interfere with each other, and a conventional method is to set a high-cost bandpass filter between an antenna and the analog front-end circuit in each of the transceiver, for filtering the signal (s) from the other transceiver.

To solve this problem, the present invention provides a control method which can control transmission power and/or receiver gain of two of STA1, STA2 and STA3 to reduce mutual interference of signals on different links, so that there is no filter set between the antenna and the analog front-end circuit of the two stations. In the following description, STA1 and STA2 are used in the following description, wherein STA1 and STA2 may use the channels whose frequencies are close, for example, the STA1 may use the channel corresponding to 5GHz band while the STA2 may use the channel corresponding to 5GHz band; or the STA1 may use the channel corresponding to 5GHz band while the STA2 may use the channel corresponding to 6GHz band; or the STA1 may use the channel corresponding to 6GHz band while the STA2 may use the channel corresponding to 5GHz band; or the STA1 may use the channel corresponding to 6GHz band while the STA2 may use the channel corresponding to 6GHz band. Hereinafter, "TX power" of the STA1/STA2 is used to indicate the power of the transmitter signal broadcasted by the STA1/STA2, or any other value capable of representing the strength/power/amplitude of the transmitter signal broadcasted by the STA1/STA2; and "RX gain" of the STA1/STA2 is used to indicate the power gain of the receiver within the STA1/STA2, or any other amplifying factor contributed by the receiver of the STA1/STA2.

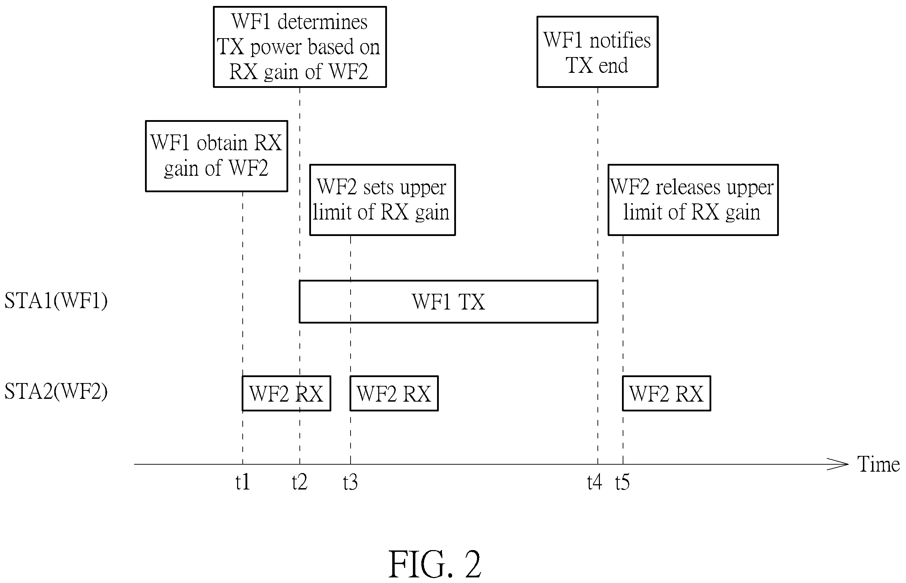

FIG. 2 is a control method of the wireless communication circuit 120 of the STA MLD 100 according to one embodiment of the present invention. As shown in FIG. 2, at time t1, the STA2 starts to receive one packet from another electronic device via Link-2, and the STA2 notifies the STA1 that it is receiving a packet or is preparing to receive a packet. In this embodiment, the packet received by the STA2 may be a PPDU comprising a preamble and a payload, and the STA2 may obtain information of protocol such as IEEE 802.11 b/g/n/ac/ax, high-throughput (HT) and/or high-efficiency (HE), from PPDU preamble or header to determine a most suitable RX gain. After the RX gain is determined, the STA2 uses the determined RX gain to receive the payload of the packet. It is noted that the determination of the RX gain is known by a person skilled in the art, so the detailed description of the RX gain determination is omitted here. In addition, the STA2 may further notify the STA1 of the RX gain of the STA2, or the STA1 gets the information of the RX gain of the STA2 from the internal buffer.

At time t2, the STA1 prepares to transmit packet (s) to another electronic device via Link-1. At this time, the STA1 determines its TX power according to the RX gain of the STA2. Specifically, the STA1 may have a look-up table recording a plurality of RX gain ranges and corresponding TX power, wherein the look-up table is pre-determined in product development phase wherein it minimizes the interference of the STA1 to the STA2 according the mapping RX gain and TX power. In addition, the STA1 notifies the STA2 that it is transmitting packet(s) or is preparing to transmitting packet(s).

At time t3, because the STA2 receives the notification indicating that the STA1 is transmitting packet, the STA2 sets an upper limit of the RX gain, to prevent excessively high RX gain from amplifying signals from the STA1 and affecting its own operation. Preferably, the upper limit of the RX gain is the RX gain used to receive the payload of the previous packet (i.e. the packet received after t1). Then, the STA2 starts to receive one packet from another electronic device via Link-2, and the STA2 notifies the STA1 that it is receiving a packet or is preparing to receive a packet. In this embodiment, the packet received by the STA2 comprises a preamble and a payload, and the STA2 may determine a most suitable RX gain based on the information of the header of the received packet and the upper limit of the RX gain. For example, if the STA2 analyzes the header to determine a most suitable RX gain that is lower than the upper limit of the RX gain, this most suitable RX gain is used to receive the payload of the packet; and if the STA2 analyzes the header to determine a most suitable RX gain that is greater than the upper limit of the RX gain, the upper limit of the RX gain serves as the most suitable RX gain for receiving the payload of the packet. After the RX gain is determined, the STA2 uses the determined RX gain to receive the payload of the packet. In addition, the STA2 may further notify the STA1 of the RX gain of the STA2, or the STA1 gets the information of the RX gain of the STA2 from the internal buffer.

At time t4, the STA1 notifies the STA2 that the packet transmission has been ended, and the STA2 releases the previously set upper limit of RX gain.

At time t5, because the STA1 does not transmit any packet, the STA2 obtains information of protocol such as IEEE 802.11 b/g/n/ac/ax, HT, and/or HE, from preamble and/or header of the received PPDU to determine the most suitable RX gain, without setting the upper limit of the RX gain. For example, preamble and/or header in a PPDU allows the receiver to estimate channel characteristics and obtain received signal strength indication (RSSI) information in L-STF, L-LTF or other preamble fields. After the RX gain is determined, the STA2 uses the determined RX gain to receive the payload of the packet. In addition, similar to the operations at times t1 and t3, the STA2 notifies the STA1 of the packet reception and the RX gain of the STA2.

In the above embodiment shown in FIG. 2, by determining the TX power of the STA1 according to the current RX gain of the STA2, and by setting the upper limit of the RX gain of the STA2 during the packet transmission of the STA1, the interference of the STA1 to the STA2 can be controlled and meet the designer's requirements.

It is noted that the operations of the STA1 and STA2 shown in FIG. 2 can be interchanged. That is, the STA2 may determine its TX power according to the current RX gain of the STA1 when the STA1 is receiving a packet, and the STA1 may set the upper limit of the RX gain of the STA1 during the packet transmission of the STA2.

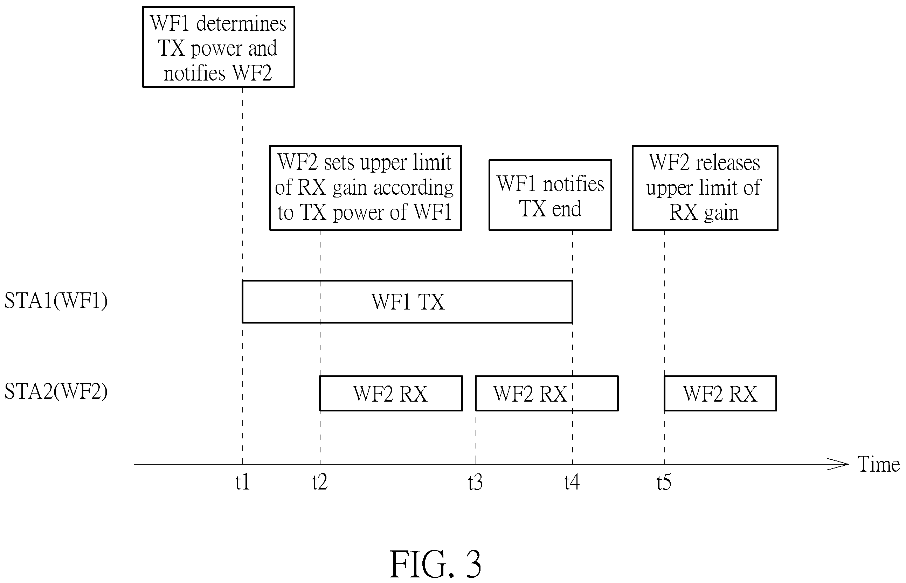

FIG. 3 is a control method of the wireless communication circuit 120 of the STA MLD 100 according to one embodiment of the present invention. As shown in FIG. 3, at time t1, the STA1 starts to transmit packet(s) to another electronic device via Link-1. In this embodiment, because the STA1 does not receive any notification indicating that the STA2 is receiving the packet, the STA1 determines the TX power according any suitable mechanism for the transmission of the packet. In addition, the transceiver notifies the STA2 that it is transmitting packet(s) or is preparing to transmitting packet (s), and the TX power of the STA1 is also transmitted/provided to the STA2.

Because the STA2 receives the notification indicating that the STA1 is transmitting packet, the STA2 sets an upper limit of the RX gain, to prevent excessively high RX gain from amplifying signals from the STA1 and affecting its own operation. Preferably, the STA2 may have a look-up table recording a plurality of TX power ranges and corresponding upper limit of RX gain, wherein the look-up table is pre-determined in the product development phase wherein it minimizes the interference of the STA1 to the STA2 according to the mapping RX gain and TX power.

At time t2, the STA2 receives the packet from another electronic device via Link-2. At this time, the STA2 determines its RX gain according to the upper limit of the RX gain determined according to the TX power of the STA1 and the information of the header of the received packet. Then, the STA2 starts to receive one packet from another electronic device via Link-2, and the STA2 notifies the STA1 that it is receiving a packet or is preparing to receive a packet. In this embodiment, the packet received by the STA2 comprises a preamble and a payload, and the STA2 may determine a most suitable RX gain based on the information of the header of the received packet and the upper limit of the RX gain. For example, if the STA2 analyzes the header to determine a most suitable RX gain that is lower than the upper limit of the RX gain, this most suitable RX gain is used to receive the payload of the packet; and if the STA2 analyzes the header to determine a most suitable RX gain that is greater than the upper limit of the RX gain, the upper limit of the RX gain serves as the most suitable RX gain for receiving the payload of the packet. After the RX gain is determined, the STA2 uses the determined RX gain to receive the payload of the packet. In addition, the STA2 may further notify the STA1 of the RX gain of the STA2, or the STA1 gets the information of the RX gain of the STA2 from the internal buffer.

At time t3, the STA1 receives the next packet from another electronic device via Link-2. Because the STA1 stills transmits the packet(s), the STA2 determines its RX gain according to the upper limit of the RX gain determined according to the TX power of the STA1 and the information of the header of the received packet. After the RX gain is determined, the STA2 uses the determined RX gain to receive the payload of the packet. In addition, the STA2 may further notify the STA1 of the RX gain of the STA2, or the STA1 gets the information of the RX gain of the STA2 from the internal buffer.

At time t4, the STA1 notifies the STA2 that the packet transmission has been ended, and the STA2 releases the previously set upper limit of RX gain.

At time t5, because the STA1 does not transmit any packet, the STA2 obtains information of protocol such as IEEE 802.11 b/g/n/ac/ax, HT, and/or HE, from preamble and/or header of the received PPDU, to determine the most suitable RX gain, without setting the upper limit of the RX gain. After the RX gain is determined, the STA2 uses the determined RX gain to receive the payload of the packet. In addition, similar to the operations at times t2 and t3, the STA2 notifies the STA1 of the packet reception and the RX gain of the STA2.

In the above embodiment shown in FIG. 3, by setting the upper limit of the RX gain of the STA2 during the packet transmission of the STA1, the interference of the STA1 to the STA2 can be controlled and meet the designer's requirements.

It is noted that the operations of the STA1 and STA2 shown in FIG. 3 can be interchanged. That is, the STA1 may set the upper limit of the RX gain of the STA1 during the packet transmission of the STA2.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A control method of a multi-link device, in the following also referred to as MLD, wherein the MLD comprises a first station and a second station, the first station and the second station establish a first link and a second link with one or more devices, respectively, and the control method comprises:
using the first station to wirelessly transmit a first packet via the first link;
notifying the second station that the first station is transmitting the first packet;
determining an upper limit of a receiver gain, in the following also referred to as RX gain, of the second station;
determining a first RX gain of the second station according to information of a header of a second packet received by the second station via the second link and the upper limit of the RX gain of the second station;
using the first RX gain to receive a payload of the second packet; and
after receiving a notification indicating that a transmission of the first packet is ended, releasing the upper limit of the RX gain of the second station.

2. The control method of claim 1, further comprising:
before the first station transmitting the first packet via the first link, receiving a third packet via the second link by the second station with a second RX gain; and
determining a transmission power, in the following also referred to as TX power, according to the second RX gain;
and the step of using the first station to wirelessly transmit the first packet via the first link comprises:
using the first station to use the TX power to wirelessly transmit the first packet via the first link when the second station is receiving the third packet.

3. The control method of claim 2, wherein the step of determining the upper limit of the RX gain of the second station comprising:
setting the second RX gain as the upper limit of the RX gain of the second station.

4. The control method of any one of claims 1 to 3, further comprising:
notifying the second station of a TX power that the first station used to transmit the first packet; and
the step of determining the upper limit of the RX gain of the second station comprises:
determining the upper limit of the RX gain of the second station according to the TX power used by the first station to transmit the first packet.

5. The control method of any one of claims 1 to 4, wherein the first link uses a first channel of a 5GHz band or a 6GHz band, and the second link uses a second channel of the 5GHz band or the 6GHz band.

6. A multi-link device, in the following also referred to as MLD, comprising:
a first station; and
a second station, wherein the first station and the second station establish a first link and a second link with one or more devices, respectively;
wherein the first station wirelessly transmits a first packet via the first link, and notifies the second station that the first station is transmitting the first packet; the second station determines an upper limit of a receiver gain, in the following also referred to as RX gain, of the second station, and determines a first RX gain of the second station according to information of a header of a second packet received by the second station via the second link and the upper limit of the RX gain of the second station; the second station uses the first RX gain to receive a payload of the second packet; and after receiving a notification indicating that a transmission of the first packet is ended, the second station releases the upper limit of the reception gain of the second station.

7. The MLD of claim 6, wherein before the first station transmitting the first packet via the first link, the second station receives a third packet via the second link with a second RX gain; the first station determines a transmission power, in the following also referred to as TX power, according to the second RX gain, and the first station uses the TX power to wirelessly transmit the first packet via the first link when the second station is receiving the third packet.

8. The MLD of claim 7, wherein the second station sets the second RX gain as the upper limit of the RX gain of the second station.

9. The MLD of any one of claims 6 to 8, wherein the first station notifies the second station of a TX power that the first station used to transmit the first packet; and the second station determines the upper limit of the RX gain of the second station according to the TX power used by the first station to transmit the first packet.

10. The MLD of any one of claims 6 to 9, wherein the first link uses a first channel of a 5GHz band or a 6GHz band, and the second link uses a second channel of the 5GHz band or the 6GHz band.
